# EUROPÄISCHE PATENTSCHRIFT

(11) **EP 2 147 495 B1**
(45) Veröffentlichungstag und Bekanntmachung des Hinweises auf die Patenterteilung: **20.06.2012**
(21) Anmeldenummer: 08750043.5
(22) Anmeldetag: 05.05.2008
(51) Int. Cl.: H02J 9/06

(54) **VERFAHREN ZUR STEUERUNG PARALLEL GESCHALTETER ERSATZSTROMQUELLEN UND VORRICHTUNG MIT PARALLEL GESCHALTETEN ERSATZSTROMQUELLEN**
METHOD FOR CONTROLLING BACKUP POWER SOURCES CONNECTED IN PARALLEL AND DEVICE COMPRISING BACKUP POWER SOURCES CONNECTED IN PARALLEL
PROCÉDÉ DE COMMANDE DE SOURCES D'ALIMENTATION DE RÉSERVE MONTÉES EN PARALLÈLE, ET DISPOSITIF COMPRENANT DES SOURCES D'ALIMENTATION DE RÉSERVE MONTÉES EN PARALLÈLE

(30) Priorität: 03.05.2007 DE 102007021089
(43) Veröffentlichungstag der Anmeldung: 27.01.2010
(73) Patentinhaber: Piller Group GmbH, 37520 Osterode am Harz (DE)
(72) Erfinder: HERBENER, Frank, 37539 Bad Grund (DE); PÖSCHEL, Orleff, 37520 Osterode (DE)
(74) Vertreter: Rehberg Hüppe + Partner
(86) Internationale Anmeldenummer: PCT/EP2008/055483
(87) Internationale Veröffentlichungsnummer: WO 2008/135549

(56) Entgegenhaltungen:
- US-B2- 7 072 195

## Beschreibung

### TECHNISCHES GEBIET DER ERFINDUNG

Die Erfindung betrifft ein Verfahren zur Steuerung mehrerer parallel geschalteter Ersatzstromquellen, mit den Merkmalen des Oberbegriffs des unabhängigen Patentanspruchs 1 sowie eine Vorrichtung mit mehreren parallel geschalteten Ersatzstromquellen, mit den Merkmalen des Oberbegriffs des unabhängigen Patentanspruchs 6.

Die Ersatzstromquellen, die bei der vorliegenden Erfindung zum Einsatz kommen können, sind vielfältig. Es kann sich bei ihnen um solche handeln, bei denen eine zwei Wicklungen aufweisende elektrische Maschine vorgesehen ist, deren eine Wicklung an einen Anzapf einer Drossel zwischen einem Wechselstromnetz und einem Lastbus angeschlossen ist. Auch eine solche Ersatzstromquelle wird hier als eingangsseitig an das Wechselstromnetz und ausgangsseitig an den Lastbus angeschlossen angesehen. Die elektrische Maschine bewirkt beim Mitlaufen im Netzbetrieb des Lastbusses eine Verbesserung der Stromqualität, indem Netzschwankungen und Verzerrungen des vom Wechselstromnetz gelieferten Wechselstroms ausgemittelt werden. Für die kurzfristige Ersatzversorgung des Lastbusses wird die andere Wicklung der elektrischen Maschine über einen Wechselrichter mit Wechselstrom beaufschlagt, wobei die elektrische Energie von einem Generator stammt, der von einem Schwungrad angetrieben wird. Das Schwungrad wurde zu diesem Zweck zuvor, d. h. während des Netzbetriebs, mit kinetischer Energie aufgeladen, wobei der Generator als Motor verwendet wurde. Für eine längerfristige Ersatzversorgung des Lastbusses kann ein zusätzlicher Motor, beispielsweise ein Dieselmotor, vorgesehen sein, der den Rotor der elektrischen Maschine direkt mechanisch antreiben kann. Auf den genauen Aufbau der Ersatzstromquelle kommt es für die vorliegende Erfindung aber nicht an.

Auch hinsichtlich des Anschlusses der Ersatzstromquellen an den Lastbus bestehen Variationsmöglichkeiten. So können die Ersatzstromquellen wie in dem geschilderten Fall der an den Anzapf einer auf diese Weise geteilten Drossel angeschlossenen elektrischen Maschine auch mit dem Lastbus über eine Drossel verbunden sein. Zwingend ist eine Drossel aber nur zwischen jeder Ersatzstromquelle und dem Wechselstromnetz. Zu versorgende Lasten können unmittelbar an den Lastbus aber auch an jeder Stelle zwischen einer Ersatzstromquelle und dem Lastbus angeschlossen sein.

### STAND DER TECHNIK

Um die Versorgung der an einen Lastbus angeschlossenen elektrischen Lasten beim Ausfall eines Wechselstromnetzes sicherzustellen, kann eine einzige, entsprechend groß dimensionierte Ersatzstromquelle vorgesehen werden, oder mehrere parallel geschaltete Ersatzstromquellen können den Lastbus mit der nötigen elektrischen Leistung versorgen. Dabei ist die letztere Möglichkeit in aller Regel bevorzugt, weil auf standardisierte Ersatzstromquellen zurückgegriffen werden kann, die nur bezüglich ihrer Anzahl auf den jeweiligen Anwendungsfall angepasst werden müssen. Wenn der Leistungsbedarf für den Lastbus grundsätzlich ansteigt, können auch nachträglich zusätzliche Ersatzstromquellen bereitgestellt werden. Überdies ist der Ausfall einer einzelnen dieser Ersatzstromquellen meistens unproblematisch. Auch das wieder Anfahren des Netzbetriebs ist bei mehreren parallel geschalteten Ersatzstromquellen einfacher, weil das Wechselstromnetz nicht sofort wieder die volle Leistung übernehmen muss, sondern die einzelnen Versorgungswege von dem Wechselstromnetz zu dem Lastbus, an denen die einzelnen Ersatzstromquellen angeordnet sind, nacheinander von der Versorgung durch die Ersatzstromquelle auf die Netzversorgung umgeschaltet werden können. Bei der Verwendung mehrerer parallelgeschalteter Ersatzstromquellen ist jedoch dafür zu sorgen, dass diese möglichst gleichmäßig belastet werden, d. h. den Leistungsbedarf des Lastbusses zu möglichst gleichen Teilen decken. Dabei ist es grundsätzlich denkbar, dass eine übergeordnete Steuerung den Gesamtleistungsbedarf ermittelt und auf die einzelnen Ersatzstromquellen verteilt. Dieses Konzept läuft jedoch einem modularen Aufbau der Gesamtvorrichtung zuwider.

Bei einem Droop genannten Verfahren mit den Merkmalen des Oberbegriffs des unabhängigen Patentanspruchs 1 und einer Vorrichtung mit den Merkmalen des Oberbegriffs des unabhängigen Patentanspruchs 6 ist es zum Abstimmen der von den einzelnen Ersatzstromquellen abgegebenen Leistungen, wenn diese sämtlich von dem Wechselstromnetz getrennt sind, bekannt, in jeder Ersatzstromquelle einen Sollwert für die Frequenz des auf dem Lastbus von allen Ersatzstromquellen gemeinsam bereitgestellten Wechselstroms aus einer Kennlinie zu bestimmen, die mit der von der jeweiligen Wechselstromquelle aktuell abgegebenen Leistung abfällt. Mit diesem Sollwert wird die tatsächlich gemessene Frequenz des Wechselstroms auf dem Lastbus als Istwert verglichen. Wenn der für die jeweilige Ersatzstromquelle bestimmte Sollwert der Frequenz über dem gemessenen Istwert auf dem Lastbus liegt, wird die von der Ersatzstromquelle an den Lastbus abgegebene Leistung durch den Versuch der Ersatzstromquelle erhöht, den Istwert der Frequenz auf den Sollwert anzuheben. Die mit dem Versuch der Frequenzerhöhung verbundene Leistungssteigerung der jeweiligen Wechselstromquelle hat wegen der fallenden Frequenz-Leistungs-Kennlinie eine Absenkung des Sollwerts für die Frequenz zur Folge. Auf diese Weise passt sich eine einzelne Ersatzstromquelle von unten an eine vom Lastbus geforderte Leistung an. Entsprechend nähert sich eine Ersatzstromquelle, die anfangs mehr als eine durchschnittliche Leistung an den Lastbus abgegeben hat, von oben an die geforderte Leistung an. Bei gleichen Ersatzstromquelle und gleichen Kennlinien werden so alle Ersatzstromquellen auf gleiche Leistung eingeregelt. Wenn sich dabei durch ansteigende oder abfallende Leistungen der einzelnen Ersatzstromquellen oder unterschiedliche Lasten an dem Lastbus der Istwert der Frequenz des Wechselstroms auf dem Lastbus ändert, entspricht dies einer geänderten von dem Lastbus angeforderten Leistung, an die sich die Leistungen aller Ersatzstromquellen automatisch anpassen. Vorteilhafterweise ist für diese Abstimmung ihrer Leistungen keine Kommunikation zwischen den einzelnen Ersatzstromquellen erforderlich. Jeder Ersatzstromquelle können eigene Einrichtungen zum Bestimmen der Frequenz des Wechselstroms auf dem Lastbus zugeordnet werden, und die eigene aktuelle Leistung liegt in jeder Ersatzstromquelle in aller Regel sowieso vor. Diese bekannte Vorgehensweise ist aber nicht anwendbar, um die Leistungen der Ersatzstromquellen zu regeln, die eingangsseitig noch nicht wieder mit dem Wechselstromnetz verbunden sind, während andere, ausgangsseitig mit diesen über den Lastbus verbundene Ersatzstromquellen bereits wieder mit dem Wechselstromnetz verbunden sind oder von diesem aufgrund eines nur teilweisen Ausfalls des Wechselstromnetzes nie getrennt waren, so dass die über die jeweilige Drossel auf den Lastbus übertragene elektrische Leistung von dem Wechselstromnetz bereitgestellt wird, weil durch die Verbindung des Lastbusses mit dem Wechselstromnetz dem Wechselstrom auf dem Lastbus die Frequenz des Wechselstromnetzes aufgezwungen wird. Die Frequenz des Wechselstroms auf dem Lastbus steht so als Stellgröße für das Einregeln aller noch im Einsatz befindlicher Ersatzstromquellen nicht zur Verfügung.

Ein spezielles Droop-Verfahren zur Steuerung mehrerer parallel geschalteter Ersatzstromquellen, die eingangsseitig trennbar mit einem Wechselstromnetz und ausgangsseitig mit einem gemeinsamen Lastbus verbunden sind, während alle Ersatzstromquellen vom Netz getrennt sind, ist aus der US 7,072,195 B2 bekannt. Neben Vorrichtungen, bei denen mehrere parallel geschaltete Ersatzstromquellen eingangsseitig jeweils trennbar mit einem Wechselstromnetz und ausgangsseitig mit einem gemeinsamen Lastbus verbunden sind, die als on-line UPS Systeme bezeichnet werden, beschreibt die US 7,072,195 B2 auch Vorrichtungen, bei denen statt der eingangsseitigen Verbindung der Ersatzstromquellen mit dem Wechselstromnetz das Wechselstromnetz direkt trennbar mit dem Lastbus verbunden ist und die als line-interactive UPS Systeme bezeichnet werden. Für ein solches line-interactive UPS System wird zusätzlich das Wiederanschließen des Wechselstromnetzes an den Lastbus beschrieben. Hierzu wird ein Phasenwinkel zwischen dem Wechselstromnetz und dem Lastbus vor dem Wiederverbinden des Wechselstromnetzes mit dem Lastbus möglichst auf null reduziert. Mit einem gemischten Betrieb eines on-line UPS Systems während des nacheinander Wiederverbindens der einzelnen eingangsseitig zunächst von dem Wechselstromnetz getrennten und ausgangsseitig mit dem gemeinsamen Lastbus verbundenen Ersatzstromquellen mit dem Wechselstromnetz befasst sich die US 7,072,195 B2 nicht.

Auch die US 5,596,492 A beschreibt ein Droop-Verfahren zum aufeinander Abstimmen der von den einzelnen Ersatzstromquellen abgegebenen Leistungen in einem line-interactive UPS System, während der Lastbus von dem Wechselstromnetz getrennt ist. Dabei wird die Droop-Kennlinie in allen Ersatzstromquellen verschoben, um eine bestimmte Frequenz des Wechselstroms auf dem Lastbus einzuhalten. Diese Verschiebung wird auch genutzt, um die Frequenz des Wechselstroms auf dem Lastbus beim Wiederverbinden des Lastbusses mit dem Wechselstromnetz auf die Frequenz des Wechselstromnetzes in solcher Weise abzustimmen, dass die Leistungsversorgung des Lastbusses kontrolliert, d. h. unter Herabfahren der Leistung der Ersatzstromquellen an das Wechselstromnetz übergeben wird. Die US 5,596,492 betrifft kein on-line UPS System, bei dem die einzelnen Ersatzstromquellen eingangsseitig trennbar mit dem Wechselstromnetz verbunden sind und insbesondere keinen gemischten Betrieb eines solchen on-line UPS Systems bei Wiederverbinden der einzelnen Ersatzstromquellen mit dem Wechselstromnetz nach dem Wiederkehren des Wechselstromnetzes.

Aus der DE 197 15 468 C1 ist ein System zur Stabilisierung eines Stromversorgungsnetzes bekannt, das als eine von mehreren parallel geschalteten Ersatzstromquellen in einem on-line UPS System einsetzbar ist. Auch die DE 100 02 583 A1 beschreibt eine Vorrichtung zur unterbrechungsfreien Stromversorgung, die als eine von mehreren parallel geschalteten Ersatzstromquellen in einem on-line UPS System Verwendung finden kann.

### AUFGABE DER ERFINDUNG

Der Erfindung liegt die Aufgabe zugrunde, ein Verfahren mit den Merkmalen des Oberbegriffs des unabhängigen Patentanspruchs 1 und eine Vorrichtung mit den Merkmalen des unabhängigen Patentanspruchs 6 aufzuzeigen, mit denen auch während des sukzessiven wieder Verbindens der Eratzstromquellen mit dem Wechselstromnetz ein unabhängiges Einregeln der Leistungen der einzelnen noch nicht wieder mit dem Wechselstromnetz verbundenen Ersatzstromquellen möglich ist, um diese gleichmäßig zu belasten.

### LÖSUNG

Erfindungsgemäß wird die Aufgabe durch ein Verfahren mit den Merkmalen des unabhängigen Patentanspruchs 1 und durch eine Vorrichtung mit den Merkmalen des unabhängigen Patentanspruchs 6 gelöst. Bevorzugte Ausführungsformen des neuen Verfahrens sind in den abhängigen Patentansprüchen 2 bis 5 beschrieben, während die abhängigen Patentansprüche 7 bis 12 bevorzugte Ausführungsformen der neuen Vorrichtung definieren.

### BESCHREIBUNG DER ERFINDUNG

Bei dem neuen Verfahren wird ein Phasenwinkel zwischen dem Wechselstromnetz und dem Lastbus, der dann auftritt, wenn der Lastbus auch nur über eine Drossel einer Ersatzstromquelle mit dem Wechselstromnetz verbunden ist, bestimmt; und dieser Phasenwinkel wird zum aufeinander Abstimmen der von den einzelnen Ersatzstromquellen abgegebenen Leistungen verwendet, während ein Teil der abgangsseitig parallelgeschalteten Ersatzstromquellen eingangsseitig mit dem Netz und ein anderer Teil nicht mit dem Netz verbunden ist. Dazu wird die von jeder der noch nicht wieder mit dem Wechselstromnetz verbundenen Ersatzstromquellen abgegebene Leistung einzeln in Abhängigkeit von dem Phasenwinkel eingestellt. Der Phasenwinkel zwischen dem Wechselstromnetz und dem Lastbus ist ein Maß für die über jede der Drosseln, über die bereits wieder Wechselstrom von dem Wechselstromnetz fließt, auf den Lastbus übertragene Leistung. Konkret ist der Phasenwinkel proportional zu der über jede der Drosseln von dem Wechselstromnetz auf den Lastbus übertragenen Leistung, und mit der Kenntnis des Phasenwinkels ist auch diese Leistung selbst bekannt. Indem jetzt jede der Ersatzstromquellen so eingestellt wird, dass sie ebenfalls diese Leistung abgibt, werden alle Ersatzstromquellen, die eingangsseitig noch nicht wieder über ihre Drossel mit dem Wechselstromnetz verbunden sind, auf eine gleiche Leistung eingestellt. Wenn sich dabei der Phasenwinkel verringert, weil die von den Ersatzstromquellen insgesamt an den Lastbus bereitgestellte Leistung so groß wird, dass über jede wieder mit dem Wechselstromnetz verbundene Drossel nur noch weniger Leistung auf den Lastbus übertragen wird, so geht dies reduzierend auf die von den einzelnen Ersatzstromquellen angeforderte Leistung ein. Damit liegt ein kompletter Regelkreis vor, der dazu führt, dass alle Ersatzstromquellen ebenso gleich belastet werden wie die bereits wieder mit dem Wechselstromnetz verbundenen Drosseln.

Dabei ist das neue Verfahren für die einzelnen Ersatzstromquellen völlig unabhängig voneinander ausführbar. Dazu kann der Phasenwinkel zwischen dem Wechselstromnetz und dem Lastbus für jede noch nicht wieder mit dem Wechselstromnetz verbundene Ersatzstromquelle separat bestimmt werden, obwohl dieser Phasenwinkel für alle Ersatzstromquellen gleich ist, um die Ersatzstromquellen völlig unabhängig voneinander zu halten. Grundsätzlich ist es natürlich auch möglich, diesen Phasenwinkel zentral zu bestimmen und allen Ersatzstromquellen zur Verfügung zu stellen.

Wenn das Wechselstromnetz vor den Eingängen der einzelnen Ersatzstromquellen bzw. der diesen zugeordneten Drosseln verzweigt ist, so dass auch nur ein Teil der Zweige des Wechselstromnetzes ausgefallen oder wiedergekehrt sein kann, ist es günstig, wenn eine separate Busleitung zwischen den Ersatzstromquellen verläuft, die beispielsweise über Relais und Widerstände mit den Zweigen des Wechselstromnetzes verbunden wird, auf denen noch oder wieder Wechselstrom fließt. Diese Busleitung stellt dann allen Ersatzstromquellen die Phase des Wechselstroms des Wechselstromnetzes bereit, die sowohl zur Bestimmung des Phasenwinkels für die erfindungsgemäße Leistungsregelung als auch zur Synchronisierung der einzelnen Ersatzstromquellen mit dem Wechselstromnetz benötigt wird. Es ist auch möglich, eine die Phase des Wechselstroms allen Ersatzstromquellen zur Verfügung stellende Busleitung von einer den Ersatzstromquellen gemeinsamen, vorgelagerten Einspeisestelle, z.B. einem Mittelspannungsfeld, abzugreifen. Damit können die Widerstände und Relais entfallen.

In den einzelnen noch nicht wieder mit dem Wechselstromnetz verbundenen Ersatzstromquellen kann die von Ihnen an den Lastbus abgegebene Leistung proportional zu dem Phasenwinkel eingestellt werden. Dabei kann der zur Anwendung kommende Proportionalitätsfaktor für alle Ersatzstromquellen gleich sein. Dies ist aber nicht zwingend. Es ist auch möglich, dass z. B. unterschiedlich aufgebaute oder ausgelegte Ersatzstromquellen unterschiedlich stark an der Versorgung des Lastbusses mit Leistung beteiligt werden. Auch in diesem Fall kann das neue Verfahren genutzt werden, um alle Ersatzstromquellen in dem Maße gleichmäßig an der Versorgung des Lastbusses zu beteiligen, dass sie beispielsweise einen jeweils gleichen prozentualen Anteil ihrer Maximalleistung liefern. Grundsätzlich ist es auch möglich, dass die Ersatzstromquellen jeweils weniger Leistung an den Lastbus bereitstellen, als durch jede bereits wieder mit dem Wechselstromnetz verbundene Drossel fließt. Hierfür sind dann entsprechend abgestimmte Steuerkurven für die Leistung in Abhängigkeit von dem Phasenwinkel in den einzelnen Ersatzstromquellen zu hinterlegen. Der Fachmann weiß, dass im Falle einer Parallelschaltung von Ersatzstromquellen unterschiedlicher Leistung bei Volllast derselbe Phasenwinkel über den jeweiligen Drosseln gegeben sein muss, damit als Maximalleistung der Parallelschaltung die Summe der Maximalleistungen der einzelnen Ersatzstromquellen erhalten wird.

Der Phasenwinkel zwischen dem Wechselstromnetz und dem Lastbus kann beim aufeinander Abstimmen der von den einzelnen Ersatzstromquellen abgegebenen Leistungen während des nacheinander wieder Verbindens der Ersatzstromquellen mit dem Wechselstromnetz zusätzlich verwendet werden, um die von mindestens einem an den Lastbus angeschlossenen Notstromaggregat abgegebene Leistung einzustellen. Ein solches Notstromaggregat muss dabei niemals zur eigenen Verbindung mit dem Wechselstromnetz vorgesehen sein.

Bei der neuen Vorrichtung weist die Steuerung mindestens eine Einrichtung zum Bestimmen eines Phasenwinkels zwischen dem Wechselstromnetz und dem Lastbus auf. In Abhängigkeit von diesem Phasenwinkel stellt die Steuerung zum aufeinander Abstimmen der von den einzelnen Ersatzstromquellen abgegebenen Leistungen die von jeder der noch nicht wieder mit dem Wechselstromnetz verbundenen Ersatzstromquellen abgegebene Leistung während des nacheinander wieder Verbindens der Ersatzstromquellen mit dem Wechselstromnetz ein.

Vorzugsweise weist die Steuerung dabei für jede Ersatzstromquelle ein Modul auf, das die von der noch nicht wieder mit dem Wechselstromnetz verbundenen Wechselstromquelle abgegebene Leistung unabhängig von den Modulen anderer Ersatzstromquellen, in Abhängigkeit von dem Phasenwinkel einstellt.

Jedes der Module kann überdies eine eigene Einrichtung zum Bestimmen des Phasenwinkels zwischen dem Wechselstromnetz und dem Lastbus aufweisen.

In jedem Modul ist eine von dem Phasenwinkel abhängige Steuerkurve für die Leistung der Ersatzstromquelle abgelegt. Diese Steuerkurve kann linear von dem Phasenwinkel abhängig sein und damit ausschließlich durch einen Proportionalitätsfaktor definiert sein. Es können aber auch komplexere Steuerkurven vorgesehen sein. Die Steuerkurven in den einzelnen Modulen müssen nicht identisch sein. dies ist aber bevorzugt, wenn die Ersatzstromquellen identisch ausgebildet sind, was grundsätzlich günstig ist, um gleiche Verhältnisse in allen Teilen der neuen Vorrichtung zu haben.

Besonders bevorzugt ist es, wenn die Module der einzelnen Ersatzstromquellen die von den Ersatzstromquellen abgegebenen Leistungen in allen Betriebszuständen der Vorrichtung unabhängig voneinander einstellen. Für die Einstellung der Leistungen der Ersatzstromquellen, während noch keine von ihnen eingangsseitig wieder an das Wechselstromnetz angeschlossen ist, kann auf das aus dem Stand der Technik bekannte und eingangs beschriebene Verfahren zurückgegriffen werden, das auf der Ermittlung der vom Lastbus benötigten Leistung aus der daraus resultierenden Absenkung der Frequenz des Wechselstroms auf dem Lastbus basiert. In Kombination dieses an sich bekannten Konzepts mit der vorliegenden Erfindung können die einzelnen Ersatzstromquellen völlig autark voneinander betrieben werden, außer dass sie von Außen vorgegeben nacheinander wieder mit dem Wechselstromnetz verbunden werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines konkreten Ausführungsbeispiels unter Bezugnahme auf die beigefügten Zeichnungen näher erläutert und beschrieben.
- **Fig. 1**: zeigt ein stark schematisiertes Einlinienschaltbild der neuen Vorrichtung mit zwischen einem Wechselstromnetz und einem Lastbus parallel geschalteten Ersatzstromquellen.
- **Fig. 2**: zeigt eine von einem Phasenwinkel Δϕ abhängige Steuerkurve für die Leistung einer einzelnen Ersatzstromquelle der Vorrichtung gemäß Fig. 1 beim sukzessiven wieder Anschließen der Ersatzstromquellen an das Wechselstromnetz; und
- **Fig. 3**: zeigt eine von der aktuellen Leistung P einer einzelnen Ersatzstromquellen gemäß Fig. 1 abhängige Kennlinie einer Sollfrequenz fₛ, die zusammen mit einer Istfrequenz des Wechselstroms auf dem Lastbus zur Leistungsregelung der Ersatzstromquelle verwendet wird, wenn der Lastbus vollständig von dem Wechselstromnetz getrennt ist.

### FIGURENBESCHREIBUNG

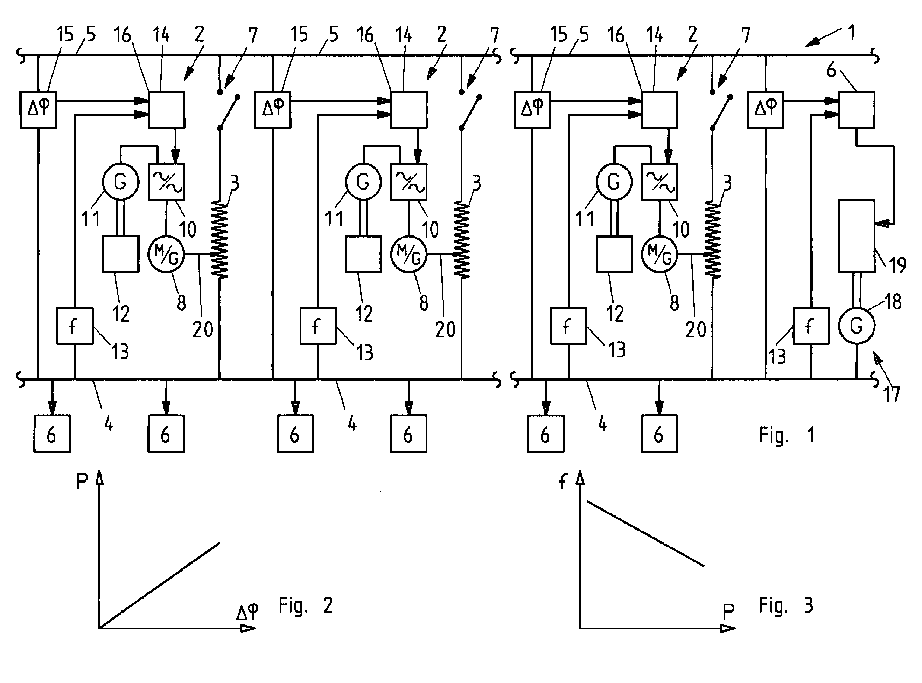

Die in **Fig. 1** skizzierte Vorrichtung 1 weist eine Mehrzahl von Ersatzstromquellen 2 auf, die jeweils über einen Anzapf 20 einer Drossel 3 eingangsseitig an ein Wechselstromnetz 5 und ausgangsseitig an einen Lastbus 4 angeschlossen sind. Die durch den jeweiligen Anzapf 20 geteilten Drosseln 3 sind im Wesentlichen zwischen den Ersatzstromquellen 2 und dem Wechselstromnetz 5 und nur zu einem geringeren Teil zwischen den Ersatzstromquellen 2 und dem Lastbus 4 angeordnet. An den Anzapf 20 jeder Drossel 3 ist eine Wicklung einer elektrischen Maschine 8 der jeweiligen Ersatzstromquelle angeschlossen, die zwei getrennte Wicklungen aufweist, wobei die beiden Wicklungen wechselseitig als Motorwicklung und als Generatorwicklung dienen können. Über den Lastbus 4 werden mehrere elektrische Lasten 6 mit Wechselstrom versorgt. Im Normalfall erfolgt dies bei geschlossenen Schaltern 7 zwischen den Drosseln 3 und dem Wechselstromnetz 5 durch das Wechselstromnetz 5. Dabei laufen die elektrischen Maschinen 8 der Ersatzstromquellen 2 lastfrei mit, um die Stromqualität auf dem Lastbus 4 zu verbessern. An die jeweils andere Wicklung der elektrischen Maschinen 8 ist ein Umrichter 10 angeschlossen, der mit einem Generator 11 verbunden ist, dessen Rotor mit einem Schwungrad 12 gekoppelt ist. Während der Netzversorgung kann Strom von der elektrischen Maschine 8 über den Umrichter 10 zu dem dann als Motor betriebenen Generator 11 fließen, um das Schwungrad 12 auf Drehzahl zu bringen, d.h. um kinetische Energie in dem Schwungrad 12 zu speichern. Wenn das Wechselstromnetz 5 ausfällt, fließt umgekehrt Strom von den durch die Schwungräder 12 angetriebenen Generatoren 11 über die Umrichter 10 zu den elektrischen Maschinen 8, die dann den Lastbus 4 versorgen. Damit dabei kein Spannungsverlust zu dem Wechselstromnetz hin auftritt, solange die Schalter 7 noch nicht geöffnet sind, sind die Drosseln 3 zwischen den Ersatzstromquellen 2 und dem Wechselstromnetz 5 vorgesehen. Wenn alle Schalter 7 offen sind, ist es von Interesse, dass alle parallel geschalteten Ersatzstromquellen 2 gleichmäßig Leistung an den Lastbus 4 abgeben, damit z. B. die in allen Schwungrädern 12 gespeicherte kinetische Energie gleichmäßig ausgenutzt wird. Hierzu sind Frequenzmesseinrichtungen 13 vorgesehen, die die Frequenz fₗ des Wechselstroms auf dem Lastbus 4 messen. Diese Frequenz fₗ wird von einer Steuerung 14, die in voneinander unabhängige Module 16 in den einzelnen Ersatzstromquellen 2 aufgeteilt ist, als Istwert mit einem Sollwert der Frequenz Fₛ verglichen, der in dem jeweiligen Modul 20 aus der aktuellen Leistung der jeweiligen Ersatzstromquelle 2 und einer fallenden Kennlinie (siehe Fig. 3) ermittelt wird. Eine dabei auftretende negative Regeldifferenz versucht die jeweilige Ersatzstromquelle durch eine höhere Leistung auszugleichen und umgekehrt. So wird die Leistung jeder Ersatzstromquelle 2 an die durch die Frequenz fₗ des Wechselstroms auf dem Lastbus 4 angezeigte benötigte Leistung angepasst, bis - im Falle gleicher Ersatzstromquellen 2 - alle Ersatzstromquellen 2 eine gleich Leistung liefern. Dieser Regelvorgang lässt eine Änderung der Frequenz fₗ des Wechselstroms auf dem Lastbus 4 sowohl in Folge veränderter Leistungen der Ersatzstromquellen 2 in ihrer Gesamtheit als auch in Folge eines unterschiedlichen Leistungsbedarfs der Lasten 6, beispielsweise durch das Zu- oder Abschalten einzelner Lasten 6, zu. Überdies ist dieser Regelvorgang ohne Änderungen auch für die Leistung eines oder mehrerer zusätzlich an den Lastbus 4 angeschlossener Notstromaggregate 17 geeignet, von denen in Fig. 1 eines in Form eines an einen Wechselstromgenerator 18 angeschlossenen Dieselmotors 19 skizziert ist.

Wenn nach dem Wiederkehren des Wechselstromnetzes 5 die Schalter 7 nacheinander geschlossen werden, um die Versorgung des Lastbusses 4 mit elektrischer Leistung schrittweise wieder auf das Wechselstromnetz 5 zu übertragen, oder wenn nur ein Zweig eines vor den Ersatzstromquellen 2 verzweigten Wechselstromnetzes 5 ausgefallen ist und nur die an diesen Zweig angeschlossenen, d. h. von diesem Ausfall betroffenen Ersatzstromquellen 2 durch Öffnen ihrer Schalter 7 von dem Wechselstromnetz 5 getrennt wurden, wird dem Wechselstrom auf dem Lastbus 4 die Frequenz des Wechselstromnetzes aufgezwungen, so dass die oben beschriebene Möglichkeit, die Leistungen der einzelnen Ersatzstromquellen 2 und des Notstromaggregats 17 aufeinander abzustimmen, nicht mehr gegeben ist. Dann verwenden die Module 16 der Steuerung 14 in den einzelnen Ersatzstromquellen 2 einen Phasenwinkel Δϕ, den Phasenwinkelmesseinrichtungen 15 zwischen dem Wechselstromnetz 5 und dem Lastbus 4 bestimmen, um die Leistung der einzelnen Ersatzstromquellen 2 einzustellen, wobei sich aufgrund des einheitlichen Phasenwinkels Δϕ gleiche Leistungen aller Ersatzstromquellen ergeben. Der Phasenwinkel Δϕ über den Drosseln 3 ist ein Maß für die über jede Drossel 3 von dem Wechselstromnetz 5 auf den Lastbus 4 übertragene elektrische Leistung. Jedes Modul 16 der Steuerung 14 in jeder Ersatzstromquelle 2, deren Schalter 7 zum Wechselstromnetz 5 noch nicht wieder geschlossen ist, kann unabhängig von den anderen Modulen 16 den Phasenwinkel Δϕ erfassen und die Ersatzstromquelle 2 zur Lieferung der eben diesem Phasenwinkel Δϕ entsprechenden Leistung an den Lastbus 4 veranlassen. Dann wird die von dem Lastbus 4 benötigte elektrische Leistung zu gleichen Teilen von den noch nicht wieder an das Wechselstromnetz 5 angeschlossenen Ersatzstromquellen 2 und über die bereits wieder mit dem Wechselstromnetz 5 über die geschlossenen Schalter 7 verbundenen Drosseln 3 bereitgestellt. Dieser Regelvorgang lässt eine Änderung des Phasenwinkels Δϕ sowohl in Folge veränderter Leistungen der noch nicht wieder mit dem Wechselstromnetz verbundenen Ersatzstromquellen 2 als auch in Folge eines unterschiedlichen Leistungsbedarfs der Lasten 6, beispielsweise durch das Zu- oder Abschalten einzelner Lasten 6, zu. Überdies ist dieser Regelvorgang ebenfalls ohne Änderungen auch für die Leistung eines oder mehrere an den Lastbus 4 angeschlossener Notstromaggregate 17 geeignet.

**Fig. 2** gibt schematisch die Steuerkurve wieder, die zur Steuerung der Leistung P in den einzelnen Ersatzstromquellen 2 in Abhängigkeit von dem Phasenwinkel Δϕ zum Einsatz kommt. Je größer der Phasenwinkel Δϕ wird, desto mehr Leistung müssen die einzelnen Ersatzstromquellen bereitstellen. Im einfachsten Fall wird die Steuerkurve gemäß Fig. 2 durch einen Proportionalitätsfaktor zwischen Δϕ und P definiert.

Demgegenüber kommt für den Zeitraum, in dem alle Schalter 7 gemäß Fig. 1 geöffnet sind, die in **Fig. 3** dargestellte fallende Kennlinie zur Anwendung. In Abhängigkeit von der aktuellen Leistung der jeweiligen Ersatzstromquelle 2 wird eine Frequenz fₛ als Sollwert für den Vergleich mit der gemessenen Frequenz fₗ des Wechselstroms auf dem Lastbus 4 ermittelt.

### BEZUGSZEICHENLISTE

- 1: Vorrichtung
- 2: Ersatzstromquelle
- 3: Drossel
- 4: Lastbus
- 5: Wechselstromnetz
- 6: Last
- 7: Schalter
- 8: elektrische Maschine
- 10: Wechselrichter
- 11: Generator
- 12: Schwungrad
- 13: Frequenzmesseinrichtung
- 14: Steuerung
- 15: Phasenwinkelmesseinrichtung
- 16: Modul
- 17: Notstromaggregat
- 18: Wechselstromgenerator
- 19: Dieselmotor
- 20: Abzapf

## Patentansprüche

1. Verfahren zur Steuerung mehrerer parallel geschalteter Ersatzstromquellen, wobei die Ersatzstromquellen eingangsseitig jeweils trennbar über eine Drossel mit einem Wechselstromnetz und ausgangsseitig mit einem gemeinsamen Lastbus verbunden sind, wobei die von jeder einzelnen Ersatzstromquelle abgegebene Leistung veränderbar ist und wobei das Verfahren die Schritte aufweist:
- bei einem Ausfall des Wechselstromnetzes: Trennen zumindest der von dem Ausfall betroffenen Ersatzstromquellen von dem Wechselstromnetz;
- nach dem Wiederkehren des Wechselstromnetzes: nacheinander wieder Verbinden der Ersatzstromquellen mit dem Wechselstromnetz, und
- aufeinander Abstimmen der von den einzelnen Ersatzstromquellen abgegebenen Leistungen,
**dadurch gekennzeichnet, dass** zum aufeinander Abstimmen der von den einzelnen Ersatzstromquellen (2) abgegebenen Leistungen, während ein Teil der Ersatzstromquellen (2) eingangsseitig mit dem Wechselstromnetz (5) verbunden und ein anderer Teil der Ersatzstromquellen (2) eingangseitig nicht mit dem Wechselstromnetz (5) verbunden ist, ein Phasenwinkel (Δϕ) zwischen dem Wechselstromnetz (5) und dem Lastbus (4) bestimmt und die von jeder der noch nicht wieder mit dem Wechselstromnetz (5) verbundenen Ersatzstromquellen (2) abgegebene Leistung in Abhängigkeit von dem Phasenwinkel (Δϕ) eingestellt wird.

2. Verfahren nach Anspruch 1, **dadurch gekennzeichnet, dass** die von den noch nicht wieder mit dem Wechselstromnetz (5) verbundenen Ersatzstromquellen (2) abgegebenen Leistungen unabhängig voneinander in Abhängigkeit von dem Phasenwinkel (Δϕ) eingestellt werden.

3. Verfahren nach Anspruch 1 oder 2, **dadurch gekennzeichnet, dass** der Phasenwinkel (Δϕ) zwischen dem Wechselstromnetz (5) und dem Lastbus (4) für jede noch nicht wieder mit dem Wechselstromnetz (5) verbundene Ersatzstromquelle (2) separat bestimmt wird.

4. Verfahren nach einem der Ansprüche 1 bis 3, **dadurch gekennzeichnet, dass** die von den noch nicht wieder mit dem Wechselstromnetz (5) verbundenen Ersatzstromquellen (2) abgegebenen Leistungen proportional zu dem Phasenwinkel (Δϕ) eingestellt werden.

5. Verfahren nach einem der Ansprüche 1 bis 4, **dadurch gekennzeichnet, dass** beim aufeinander Abstimmen der von den einzelnen Ersatzstromquellen (2) abgegebenen Leistungen während des nacheinander wieder Verbindens der Ersatzstromquellen (2) mit dem Wechselstromnetz (5) der Phasenwinkel (Δϕ) zwischen dem Wechselstromnetz (5) und dem Lastbus (4) auch verwendet wird, um die von mindestens einem an den Lastbus (4) angeschlossenen Notstromaggregat (17) abgegebene Leistung einzustellen.

6. Vorrichtung mit mehreren parallel geschalteten Ersatzstromquellen, wobei die Ersatzstromquellen eingangsseitig jeweils trennbar über eine Drossel mit einem Wechselstromnetz und ausgangsseitig mit einem gemeinsamen Lastbus verbunden sind und wobei die von jeder einzelnen Ersatzstromquelle abgegebene Leistung veränderbar ist, und mit einer Steuerung, die
- bei einem Ausfall des Wechselstromnetzes zumindest die von dem Ausfall betroffenen Ersatzstromquellen von dem Wechselstromnetz trennt;
- nach dem Wiederkehren des Wechselstromnetzes die Ersatzstromquellen nacheinander wieder mit dem Wechselstromnetz verbindet, und
- die von den einzelnen Ersatzstromquellen abgegebenen Leistungen aufeinander abstimmt,
**dadurch gekennzeichnet, dass** die Steuerung (14) mindestens eine Einrichtung (15) zum Bestimmen eines Phasenwinkels (Δϕ) zwischen dem Wechselstromnetz (5) und dem Lastbus (4) aufweist und das die Steuerung (14) zum aufeinander Abstimmen der von den einzelnen Ersatzstromquellen (2) abgegebenen Leistungen, während ein Teil der Ersatzstromquellen (2) eingangsseitig mit dem Wechselstromnetz (5) verbunden und ein anderer Teil der Ersatzstromquellen (2) eingangseitig nicht mit dem Wechselstromnetz (5) verbunden ist, die von jeder der noch nicht wieder mit dem Wechselstromnetz (5) verbundenen Ersatzstromquellen (2) abgegebene Leistung in Abhängigkeit von dem Phasenwinkel (Δϕ) einstellt.

7. Vorrichtung nach Anspruch 6, **dadurch gekennzeichnet, dass** die Steuerung (14) für jede Ersatzstromquelle (2) ein Modul (16) aufweist, das die von der noch nicht wieder mit dem Wechselstromnetz (5) verbundenen Ersatzstromquelle (2) abgegebene Leistung unabhängig von den Modulen anderer Ersatzstromquellen (2) in Abhängigkeit von dem Phasenwinkel (Δϕ) einstellt.

8. Vorrichtung nach Anspruch 7, **dadurch gekennzeichnet, dass** jedes Modul (16) eine eigene Einrichtung (15) zum Bestimmen des Phasenwinkels (Δϕ) zwischen dem Wechselstromnetz (5) und dem Lastbus (4) aufweist.

9. Vorrichtung nach Anspruch 7 oder 8, **dadurch gekennzeichnet, dass** in jedem Modul (16) eine proportional von dem Phasenwinkel (Δϕ) abhängige Steuerkurve für die Leistung der Ersatzstromquelle (2) abgelegt ist.

10. Vorrichtung nach einem der Ansprüche 6 bis 9, **dadurch gekennzeichnet, dass** die Module die von den Ersatzstromquellen (2) abgegebenen Leistungen in allen Betriebszuständen der Vorrichtung (1) unabhängig voneinander einstellen.

11. Vorrichtung nach einem der Ansprüche 6 bis 10, **dadurch gekennzeichnet, dass** die Ersatzstromquellen (2) identisch ausgebildet sind.

12. Vorrichtung nach einem der Ansprüche 6 bis 11, **dadurch gekennzeichnet, dass** mindestens ein an den Lastbus (4) angeschlossenes Notstromaggregat (17) vorgesehen ist und dass die Steuerung (14) während des nacheinander wieder Verbindens der Ersatzstromquellen (2) mit dem Wechselstromnetz (5) auch die von dem Notstromaggregat (17) abgegebene Leistung in Abhängigkeit von dem Phasenwinkel (Δϕ) einstellt.

## Claims

1. A method of controlling a plurality of parallel-connected backup power sources, each of the backup power sources being connected on the input side via a choke coil to an AC mains, in disconnectable fashion, and on the output side to a common load bus, the power supplied by each individual backup power source being variable and the method comprising the steps of:
- in the event of a failure of the AC mains: disconnecting at least the backup power sources affected by the failure from the AC mains;
- after the restoration of the AC mains: successively reconnecting the backup power sources to the AC mains; and
- matching the powers supplied by the individual backup power sources to one another,
**characterized in that**, in order to match the powers supplied by the individual backup power sources (2) to one another, while some of the backup power sources (2) are connected on the input side to the AC mains (5) and others of the backup power sources (2) are not connected on the input side to the AC mains(5), a phase angle (Δϕ) between the AC mains (5) and the load bus (4) is determined and the power supplied by each of the backup power sources (2) which have not yet been reconnected to the AC mains (5) is adjusted as a function of the phase angle (Δϕ).

2. The method according to claim 1, **characterized in that** the powers supplied by the backup power sources (2) which have not yet been reconnected to the AC mains (5) are adjusted independently of one another as a function of the phase angle (Δϕ).

3. The method according to claim 1 or 2, **characterized in that** the phase angle (Δϕ) between the AC mains (5) and the load bus (4) is determined separately for each backup power source (2) which has not yet been reconnected to the AC mains (5).

4. The method according to one of claims 1 to 3, **characterized in that** the powers supplied by the backup power sources (2) which have not yet been reconnected to the AC mains (5) are adjusted proportionally with respect to the phase angle (Δϕ).

5. The method according to one of claims 1 to 4, **characterized in that** when the powers supplied by the individual backup power sources (2) are matched to one another during the successive reconnection of the backup power sources (2) to the AC mains (5), the phase angle (Δϕ) between the AC mains (5) and the load bus (4) is also used in order to adjust the power supplied by at least one standby power supply unit (17) which is connected to the load bus (4).

6. An apparatus having a plurality of parallel-connected backup power sources, the backup power sources each being connected on the input side via a choke coil to an AC mains, in disconnectable fashion, and on the output side to a common load bus, and the power supplied by each individual backup power source being variable, and having a controller, which
- in the event of a failure of the AC mains, disconnects at least the backup power sources affected by the failure from the AC mains;
- after the restoration of the AC mains, successively reconnects the backup power sources to the AC mains; and
- matches the powers supplied by the individual backup power sources to one another,
**characterized in that** the controller (14) has at least one device (15) for determining a phase angle (Δϕ) between the AC mains (5) and the load bus (4), and **in that** the controller (14) adjusts the power supplied by each of the backup power sources (2) which have not yet been reconnected to the AC mains (5) as a function of the phase angle (Δϕ) in order to match the powers supplied by the individual backup power sources (2) to one another, while some of the backup power sources (2) are connected on the input side to the AC mains (5) and others of the backup power sources (2) are not connected on the input side to the AC mains (5).

7. The apparatus according to claim 6, **characterized in that** the controller (14) for each backup power source (2) has a module (16), which adjusts the power supplied by the backup power source (2) which has not yet been reconnected to the AC mains (5) independently of the modules of other backup power sources (2) as a function of the phase angle (Δϕ).

8. The apparatus according to claim 7, **characterized in that** each module (16) has a dedicated device (15) for determining the phase angle (Δϕ) between the AC mains (5) and the load bus (4).

9. The apparatus according to claim 7 or 8, **characterized in that** a control curve for the power of the backup power source (2), which is proportionally dependent on the phase angle (Δϕ), is stored in each module (16).

10. The apparatus according to one of claims 6 to 9, **characterized in that** the modules adjust the powers supplied by the backup power sources (2) in all operating states of the apparatus (1) independently of one another.

11. The apparatus according to one of claims 6 to 10, **characterized in that** the backup power sources (2) are designed to be identical.

12. The apparatus according to one of claims 6 to 11, **characterized in that** at least one standby power supply unit (17), which is connected to the load bus (4), is provided, and **in that** the controller (14) also adjusts the power supplied by the standby power supply unit (17) as a function of the phase angle (Δϕ) while successively reconnecting the backup power sources (2) to the AC mains (5).

## Revendications

1. Procédé pour commander plusieurs sources de courant de substitution montées en parallèle, ces sources étant reliées côté entrée à chaque fois de façon séparable par une bobine d'inductance à un réseau de courant alternatif et côté sortie à un bus de charge commun, la puissance délivrée par chaque source individuelle de courant de substitution pouvant être modifiée et le procédé présentant les étapes suivantes :
- dans le cas d'une défaillance du réseau de courant alternatif : séparation au moins des sources de courant de substitution concernées par la défaillance du réseau de courant de substitution ;
- après le retour du réseau de courant alternatif : de façon consécutive à nouveau liaison des sources de courant de substitution avec le réseau de courant alternatif, et
- harmonisation des puissances délivrées par les sources individuelles de courant de substitution,
**caractérisé en ce que**, pour l'harmonisation des puissances émises par les sources individuelles de courant de substitution (2), alors qu'une partie des sources de courant de substitution (2) est reliée côté entrée au réseau de courant alternatif (5) et une autre partie des sources de courant de substitution (2) n'est pas reliée côté entrée au réseau de courant alternatif (5), un angle de phase (Δϕ) entre le réseau de courant alternatif (5) et le bus de charge (4) est déterminé et la puissance délivrée par chacune des sources de courant de substitution (2), non encore reliées à nouveau au réseau de courant alternatif (5), est réglée en fonction de l'angle de phase (Δϕ).

2. Procédé selon la revendication 1, **caractérisé en ce que** les puissances délivrées par les sources de courant de substitution (2) non encore reliées à nouveau au réseau de courant alternatif (5), sont réglées indépendamment les unes des autres en fonction de l'angle de phase (Δϕ).

3. Procédé selon la revendication 1 ou 2, **caractérisé en ce que** l'angle de phase (Δϕ) entre le réseau de courant alternatif (5) et le bus de charge (4) est déterminé séparément pour chaque source de courant de substitution (2) qui n'est pas encore reliée à nouveau au réseau de courant alternatif (5).

4. Procédé selon l'une des revendications 1 à 3, **caractérisé en ce que** les puissances, délivrées par les sources de courant de substitution (2) non encore reliées à nouveau au réseau de courant alternatif (5), sont réglées de façon proportionnelle à l'angle de phase (Δϕ).

5. Procédé selon l'une des revendications 1 à 4, **caractérisé en ce que**, pour l'harmonisation des puissances émises par les sources individuelles de courant de substitution (2), pendant la nouvelle liaison consécutive des sources de courant de substitution (2) avec le réseau de courant alternatif (5), l'angle de phase (Δϕ) entre le réseau de courant alternatif (5) et le bus de charge (4) est utilisé également pour régler la puissance délivrée par au moins un groupe électrogène (17) raccordé au bus de charge (4).

6. Dispositif comprenant plusieurs sources de courant de substitution montées en parallèle, les sources de courant de substitution étant reliées côté entrée à chaque fois de façon séparable par une bobine d'inductance à un réseau de courant alternatif et côté sortie à un bus de charge commun et la puissance délivrée par chaque source individuelle de courant de substitution pouvant être modifiée, et une commande, qui :
- sépare au moins les sources de courant de substitution concernées par la défaillance du réseau de courant alternatif dans le cas d'une défaillance du réseau de courant alternatif ;
- relie les sources de courant alternatif de façon successive à nouveau avec le réseau de courant alternatif après le retour du réseau de courant alternatif, et
- harmonise entre elles les puissances délivrées par les sources individuelles de courant de substitution,
**caractérisé en ce que** la commande (14) présente au moins un dispositif (15) pour déterminer un angle de phase (Δϕ) entre le réseau de courant alternatif (5) et le bus de charge (4) et **en ce que**, pour l'harmonisation des puissances délivrées par les sources individuelles de courant de substitution (2), alors qu'une partie des sources de courant de substitution (2) est reliée côté entrée au réseau de courant alternatif (5) et une autre partie des sources de courant de substitution (2) n'est pas reliée côté entrée au réseau de courant alternatif (5), la commande (14) règle la puissance, délivrée par chacune des sources de courant de substitution (2) non encore reliées à nouveau au réseau de courant alternatif (5), en fonction de l'angle de phase (Δϕ).

7. Dispositif selon la revendication 6, **caractérisé en ce que** la commande (14) présente pour chaque module de courant de substitution (2) un module (16) qui règle la puissance, délivrée par la source de courant de substitution (2) non encore reliée à nouveau au réseau de courant alternatif (5), indépendamment des modules d'autres sources de courant de substitution (2) en fonction de l'angle de phase (Δϕ).

8. Dispositif selon la revendication 7, **caractérisé en ce que** chaque module (16) présente un dispositif (15) propre pour déterminer l'angle de phase (Δϕ) entre le réseau de courant alternatif (5) et le bus de charge (4).

9. Dispositif selon la revendication 7 ou 8, **caractérisé en ce qu'**une came de commande, dépendante de façon proportionnelle de l'angle de phase (Δϕ), est déposée dans chaque module (16) pour la puissance de la source de courant de substitution (2).

10. Dispositif selon l'une des revendications 6 à 9, **caractérisé en ce que** les modules règlent les puissances délivrées par les sources de courant de substitution (2) dans tous les états de service du dispositif (1) indépendamment les unes des autres.

11. Dispositif selon l'une des revendications 6 à 10, **caractérisé en ce que** les sources de courant de substitution (2) sont conçues identiques.

12. Dispositif selon l'une des revendications 6 à 11, **caractérisé en ce qu'**au moins un groupe électrogène (17) raccordé au bus de charge (4) est prévu et **en ce que** la commande (14) règle également la puissance délivrée par le groupe électrogène (17) en fonction de l'angle de phase (Δϕ) pendant la nouvelle liaison consécutive des sources de courant de substitution (2) avec le réseau de courant alternatif (5).
